# EUROPEAN PATENT APPLICATION

(11) **EP 3 257 615 A1**
(43) Date of publication of application: **20.12.2017**
(21) Application number: 16174525.2
(22) Date of filing: 15.06.2016
(51) Int. Cl.: B23K 26/03

(54) **QUALITY CONTROL OF LASER WELDING PROCESS**

(71) Applicant: Eidgenössische Materialprüfungs- und Forschungsanstalt EMPA, 8600 Dübendorf (CH)
(72) Inventor: Wasmer, Kilian, 1871 Choex (CH); Vakili Farahani, Farzad, 3075 Rüfenacht (CH); Shevchik, Sergey, 8067 Zürich (CH); Violakis, Georgios, 3603 Thun (CH); Delval, Christophe, 25300 Pontarlier (FR)
(74) Representative: Schneider Feldmann AG Patent- und Markenanwälte

(57) **Abstract**

The disclosed invention presents the use of acoustic emission read out system with at least one fiber optical sensor (50) with a compatible prop (51), which is connected via at least one signal line (52) to a processing unit (53) as part of a laser welding setup, for in-situ and real time quality control of a running laser welding process, wherein acoustic emission is measured via the at least one fiber optical sensor (50) in form of fibers with Bragg grating, fiber interferometer or Fabry-Perot structure, followed by a signal transfer and an analysis of the measured signals in the processing unit (53), estimation of the laser welding process quality due to correlation between welding quality and measured acoustic emission signals and either stopping the welding process or subsequent adaption of laser welding parameters of a laser electronics (1) of the laser welding setup in real time via a feedback loop (54) as a result of the measured acoustic emission signals after interpretation with an algorithmic framework in the processing unit (53).

## Description

### TECHNICAL FIELD

The present invention describes a use of acoustic emission read out system as part of a laser welding setup, for in-situ and real time quality control of a running laser welding process, a method for in-situ and real-time quality control of a laser welding process in a laser welding setup and a laser welding setup, comprising a laser electronics, a laser source and a laser focusing device to focus a laser beam on a surface of a workpiece in a laser irradiation focused spot with controllable laser parameters.

### STATE OF THE ART

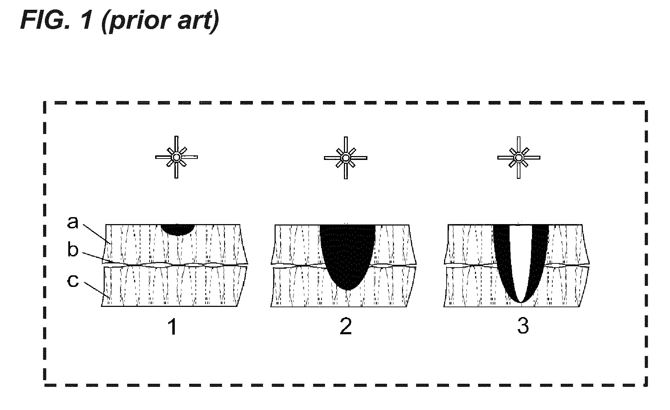

Laser welding is based on heating of the metals by incident laser irradiation thus providing the welded joint of two metallic plates a, c at an interface b between the plates as shown in Figure 1. The process holds strong non-linear dynamics resulting from nonlinear light-matter interaction, complex heat and mass transfer mechanism at the multiphase material interface (e.g. solid-liquid and liquid-vapor), and high unpredictability/instability while passing from liquid phase to vapor (plasma formation/expansion). The laser welding could be carried out in either a controlled (e.g. welding chamber) or uncontrolled environment. Many setups are known in the prior art. As depicted in Figure 1, the dynamics of the welding shows different form: occurrence of the melting pool under the laser heating 1, expansion of the melting pool inside the medium 2 and keyhole formation inside the medium 3. Such laser melting processes are done for a long time using metal workpieces, for example titanium and aluminum and their alloys or niobium, zirconium and tantalum.

The particularity of the process resides in the multiple constraints to apply on the laser irradiation due to the extreme sensitivity of the plates to material loss and surface changes in welded area; the former is mainly caused by full penetration of melt all over the layer, while the latter occurs due to overheating and evaporation of the metal. All this requires precise adjustment of the laser light dose and a well-controlled environment to bring the process dynamics into the narrow area of the phase space, defined by laser power density, temperature and time.

The weld quality control is under intensive research for already last 50 years and investigations in the field are still intensively pushed by the growing number of potential applications. One such application is the laser welding of workpieces including, thin metal parts. Those pieces exhibit different behavior regarding heat propagation compared to the welding of massive metal pieces and thus requires optimization of the welding process to avoid the material loss, which is critical when operating with thin metal parts. So far, some prior art documents are describing quality control measurements of welded workpieces after finished welding process.

In DE3913786 of 1990, a passive system is presented and the weld control is carried out using the detection of acoustic emission (AE). The measurements were carried out using sensors without contact to a workpiece and chamber walls, which were chosen to be transparent for the used laser light. The resulting laser welding quality control method could not reach desired values, due to temperature influence while the welding process and lack of sensitivity of the acoustic emission measurements.

In CN102990225, a system for laser weld quality control using acoustic emission is described. The AE during the welding is detected with acoustic sensors. Additionally, the pinhole image of the weld is taken and all the recorded data is analyzed to estimate the quality of the weld. The disadvantage of the method is in collecting of AE using contact detector which is not always possible in miniature metal plates due to their size. Besides that, heat transfer inside the plate can rapidly increase the noise levels in detected signal using contact sensor. As a consequence the quality control measurements are not very reliable and the AE setup has to be combined with other additional methods.

Another prior art, as disclosed in US4419562, avoids the disadvantages from the previous prior art detecting the AE distantly. Though, in the invention, it is not specified what kind of sensor is used. Due to the very low intensity of AE during welding of thin metal plates the AE can be hardly recognized due to the presence of noise. Besides that in case of use of special welding environments, such as vacuum, the AE can be additionally damped and it is not clear how the quality of the welding process steps can be exactly analyzed.

EP2388573 describes another laser welding system with the control of the weld quality using AE. A device irradiates ultrasonic waves and detects the reflected signal, affected by the welded area. This system is active, acoustic irradiation modulation is analyzed. This setup is on the one hand more complex using an additional irradiation and on the other hand still no sufficient accurate online welding quality control of the laser welding process of a metal plate is possible.

### DESCRIPTION OF THE INVENTION

The objective of the present invention is to create an in-situ real-time welding control method. We introduce a solution that can be used either as online weld quality monitoring or as a feedback for real-time process control by measuring acoustic emission. The method can also provide temperature measurements using the acoustic emission.

Due to the local non-uniformities in properties of the workpieces, caused by the manufacturing tolerances, additional feedback is needed to control and reproduce a reliable weld quality.
This problem is solved by the use of a sensor readout system as claimed in the independent claims.

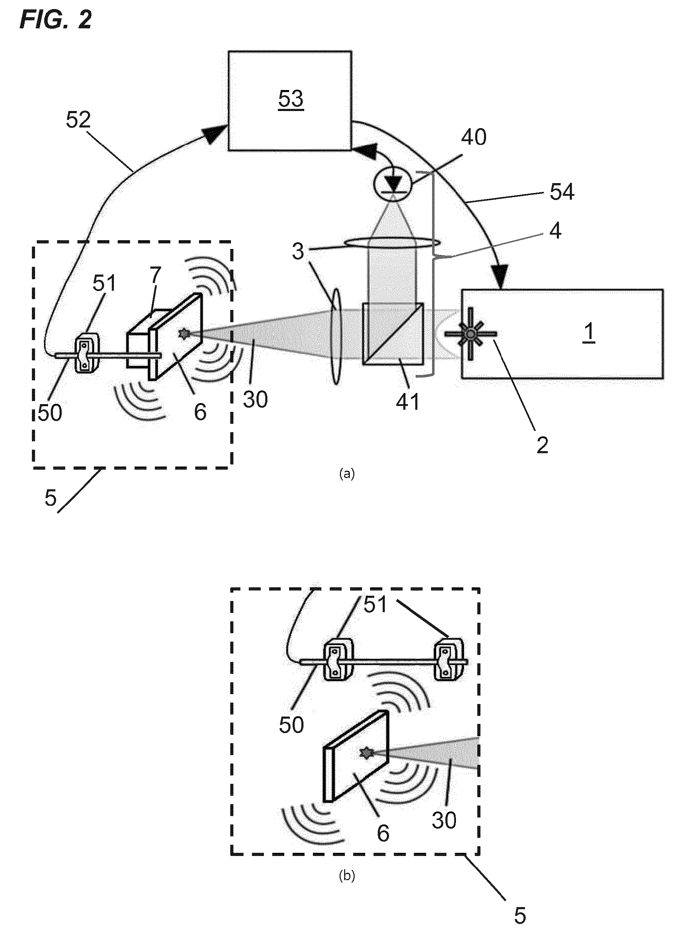

We are focused on using at least one fiber optical sensor for detection of AE and the installation schemes that provide the maximum possible sensor response are presented in Figure 2. In addition to distant measurements of AE, we propose also a contact measurement scheme. In contrast to the prior art, we use a completely passive system, without additional irradiation for sensoring the welding quality. The present solution ensures a cost-efficient solution to check the weld quality in real time, providing online optimization control possibilities for further welding steps.

### BRIEF DESCRIPTION OF THE DRAWINGS

A preferred exemplary embodiment of the subject matter of the invention is described below in conjunction with the attached drawings.
- Figure 1: shows the dynamics of welding in a schematic drawing known from the prior art.
- Figure 2: shows a schematic view of a laser welding setup with acoustic emission read-out system and additional radiation detection setup; (a) general overview, (b) alternative configuration for the sensor installation.

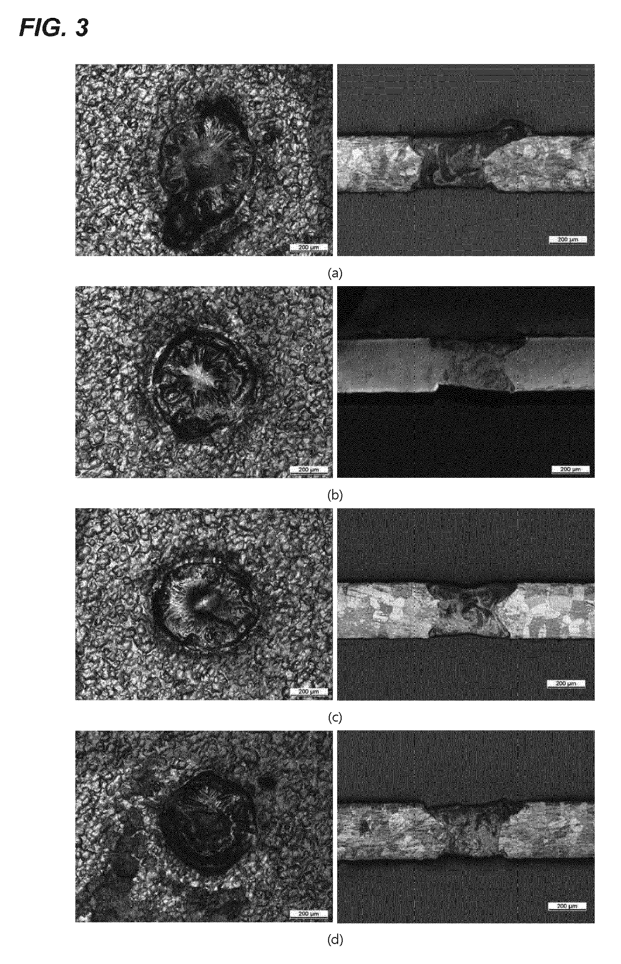

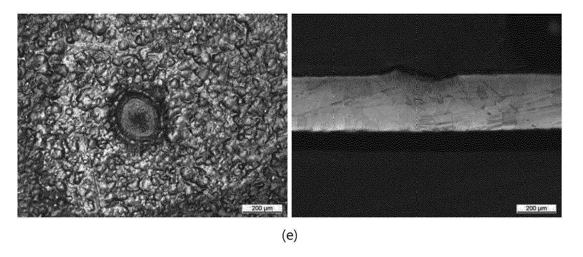

- Figure 3: shows surface and cross-section of welding trials at different power densities; (a) 212 MW/cm², (b) 142 MW/cm², (c) 113 MW/cm², (d) 85 MW/cm², (e) 28 MW/cm².
- Figures 4: showing acoustic emission signals as the response of the FBG sensor (fiber sensor with Bragg grating): (a) background noise, (b) welding signal, (c) filtered signal.
- Figures 5: are showing AE response measurements for different power densities of laser irradiation; (a) 212 MW/cm², (b) 142 MW/cm², (c) 113 MW/cm², (d) 85 MW/cm², (e) 28 MW/cm². The frame shows the acoustic response of the material evaporation (welding dynamics).
- Figure 6: shows the family of Gabor functions that were used as a basis for signal decomposition.
- Figures 7: showing descriptors based on mean squared energy of the signal sparse representation in Gabor basis. The holograms represent the weight for each coefficient, included into sparse signal representation. Each spectrogram depicts from 4900 to 5000 coefficients the energy of which exceeds some fixed threshold; (a) 212 MW/cm², (b) 142 MW/cm², (c) 113 MW/cm², (d) 85 MW/cm², (e) 28 MW/cm².
- Figures 8: are showing back reflected laser light at 1070 nm; (a) 212 MW/cm², (b) 113 MW/cm², (c) 85 MW/cm², (d) 28 MW/cm².
- Figures 9: are showing a model for determining the resonance frequencies of the welded samples (a) and the corresponding Bode plot (b). In (a) s is a Laplacian. By light grey and black the characteristics of the main resonance frequency of the welded sample depending on the length of the welded joint are marked.

### DESCRIPTION

We describe a laser welding setup and a laser welding method enabling in-situ and real time (or online) control of the quality of the running laser welding process. The quality parameters of the weld include the welding depth, the homogeneity of the welded area, minimum losses of the material (e.g. leaks or evaporation of the material due to long heat exposure and, as a result, over-heating) and defects (e.g. pores, cracks).

A special experimental setup which is very close to the industrial environment was designed in order to make a reproducible prototype. Several experiments were carried out in order to confirm the validity of the technical solution. The laser welding setup comprises a laser electronics 1, a laser source 2, a laser focusing device 3, that focuses the laser beam from the laser source 2 on the surface of a workpiece 6 or on the welded samples 6, which may be fixed in a welding environment 5, which can be in form of chamber.

For quality control of the welding process, an acoustic emission read out setup is arranged close to the workpiece 6, if needed inside the welding environment 5. The acoustic emission read out setup comprises at least one fiber optical sensor 50, appropriate props to support the sensor 51, signal lines 52, a processing unit 53 and a feedback loop 54. The processing unit 53 analyzes the data from the acoustic emission fiber optical sensor 50.

Laser welding could be carried out in either a controlled (e.g. welding chamber) or uncontrolled environment. While laser welding is carried out, at least one fiber optical sensor 50 reads out acoustic emission signals, which are forwarded by the signal lines 52 to the processing unit 53. In the processing unit 53, an analysis of the acoustic emission signals is carried out, as explained below. After analysis of the measured AE signals, the laser electronics 1 can either be stopped or the laser electronics 1 and the laser focusing device 3 can be adapted according to the measured and analyzed signals to a new combination of improved parameters before next laser welding step is carried out. The signal processing unit 53 is connected via the feedback loop 54 to the laser electronics 1 for adaptation of the laser welding process parameters, to achieve the optimal weld quality. The main signal for welding quality control is the acoustic emission, induced by the rapid development of the temperature gradient inside the metal within the laser light-matter interaction. The acoustic signals provide information about dynamics of the laser welding process.

### Optional radiation detection setup

In addition, a radiation detection setup 4 can be utilized, comprising a photo detector 40 and a beam splitter 41, for detection of optical emission of the weld zone.

The information from back reflected optical radiation of the welding area is registered by the photo detector 40 and can be used for further process quality control. After analysis of all the information, the welding process can be either stopped or the quality of the weld is assessed and corresponding adjustments of the laser parameters are performed to reach the desired temperature regime at the sample 6 while welding.

At least one fiber optical sensor 50 with compatible props 51 is placed either in contact with the sample 6 according to 5 in Figure 2,a or not in contact according to 5 in Figure 2,b. Laser welding could be carried out in either a controlled environment in form of a chamber 5 filled with a specific gas or in an uncontrolled environment Several experiments were conducted with one fiber optical sensor 50 with compatible props 51 is placed in contact with the sample 6 according to 5 in Figure 2,a and in a controlled environment in form of a chamber 5 filled with Argon. The experiments were conducted changing power density of laser irradiation in the range of (28 - 212 MW/cm²) which is commonly used for a number of applications. Acoustic signals were recorded and processed. The control of the weld quality was carried out by analyzing cross-section of the welded samples.

We aim at controlling in-situ and real time (or online) the laser welding process of plates (metal, polymer, ceramics or semi-conductors) 6 using acoustic emission. This requires precise control and accurate adaptive adjustment of laser parameters during the welding process. The target is to keep the temperature of the weld within a narrow range (stabilized temperature profile) which provides the optimal welding quality. The welding quality can be characterized by the morphology of the weld, depth penetration, heat affected zone in the interface of the two welded pieces and the amount of material loss. The latter is mainly originating from material evaporation or spattering due to material over-heating. This brings about intrinsic uneven temperature regime characterized by a rather high level of oscillations due to the process instabilities.

Due to the local non-uniformities in properties of the plates (metal, polymer, ceramics or semi-conductors) 6 (caused by the manufacturing tolerances), additional feedback is needed to control and reproduce the requested weld quality. Direct optical measurement of the optical/heat emission is not always technically possible since it requires additional optical channel and the corresponding instrument that increases the price and size of the machinery. Furthermore, the small diameter of the welding laser spot, which in practical applications is as small as 10-600 µm and does not always allow for providing precise measurements in the focus of the laser beam.

Our alternative way to control in-situ and real time (or online) the welding quality uses AE. The combination of sensitive sensors, together with an algorithmic framework that makes it possible to correlate the changes in AE signal with the welding quality is our solution.

### Signal processing

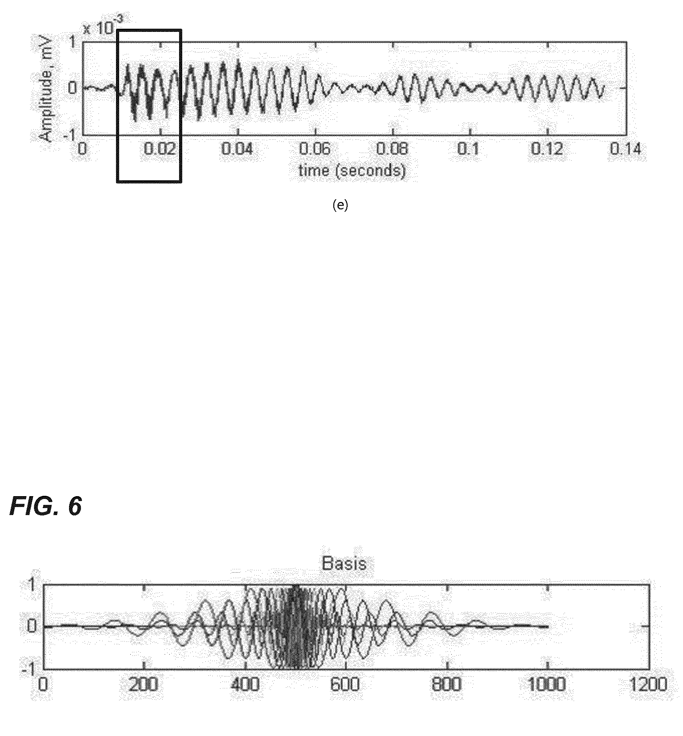

The processing of the signal is an important part. During experiments, it was figured out that the AE waves change with laser power intensity, Figures 6. These changes are mainly in the frequency content of the signal and in the duration of the new frequencies that occur changing the parameters of the laser irradiation. The physics behind AE is the pressure of the locally heated material on the surrounding area and the strength of the pressure depends on the geometry of the heated area (its depth and diameter) heating transient.

Multiple investigations also showed the changes in structure of the materials in heat affected zone, which is called HAZ and that it strongly depends on the heating transients. Thus, the correlation between changes in materials structure (which is the part of the welding quality parameters) can be figured out using AE (analysis in time-frequency domain).

The general scheme of the device is presented in the Figure 2,a. The device includes a laser source 2 that focuses laser beam (irradiation) on surface of the sample 6 in order to make the spot with a power density of 0.2-212 MW/cm², the AE sensor 50, and the signal processing unit 53.

The signal processing unit 53 is synchronized with the laser source 2 and acquires the records of the AE after each pulse burst. AE is recorded each time the laser pulse heats the surface and the recording time in case of single burst in particular does not exceed 0.30 seconds. The system can be additionally equipped by the radiation detection setup/optical emission analyzer that incorporates beam splitter 41 and a photo detector 40 in form of a photodiode or spectrometer.

The placement of the welding sample 6 and optical fiber sensor 50 inside the welding environment 5 may have a configuration as presented in Figure 2. First, the sample is installed on the special holder 7 that provides the minimum contact with the workpiece 6. The geometric configuration of the installation holder (mainly its shape) is chosen in such a way that its Eigen acoustic resonance frequency differs from the one of the welded plates. The fiber orientation that provides the maximum response to the AE signal is shown in Figure 2,a, though many other relative configurations of the fiber-workpiece are possible (e.g. see Figure 2,b).

### General arrangement of optical fibers

The used fiber optical sensors 50 can be fibers with Bragg gratings, fiber interferometers or fibers with Fabry-Perot structures. These fiber optical sensors 50 can be placed either in contact (shown in Figure 2,a) or at some distance from the welded samples 6 (sensor has to be fixed by two props 51 while strained from both sides; see Figure 2,b) and still detect the AE. The fiber optical sensors 50 are very sensitive to AE waves, which elongate or compress the fiber and thus change its optical properties.

The positioning of optical fiber sensors with respect to the acoustic source for optimal signal acquisition has to be optimized for each specific application. The sensitivity and dynamic range of the optical sensing system are determined by a combination of several parameters, such as fiber Bragg grating spectral characteristics (bandwidth, slope, reflectivity, apodization), the light source bandwidth and stability and the dynamic range of the photodetector.

In particular, the measuring should be carried out from non-fixed side of the welded workpiece 6. In case of Bragg grating (FBG) the sensor is attached to the welded sample 6 from one side, while the other side is fixed to a compatible prop. Both fixation points of the optical fiber 50 may have different resonance frequencies.

In case of Fabry-Perot and fiber optical interferometer both sensors are placed on the free/unattached side of the welded sample. This placement was discovered within the experiments.

### A possible real setup

The optical fiber sensor 50 read out system is supplied with the laser source, which provides the optical signal to the fiber and includes the signal readout system. The signal source is a sharp linewidth laser (distributed feedback or Fabry Perot cavity) and has sufficient power to return minimum noise signal (at least 0.1 mW of input power) at the Bragg grating design wavelength (typically 1550 nm).

The photo detector 40 is a photodiode fast enough to detect acoustic and ultrasonic frequencies. The source laser signal is set at the edge of the Bragg grating filter and the sensitivity and resolution is determined by the laser bandwidth and the slope of the Bragg grating spectrum. The Bragg grating can be designed as high sensitivity, low dynamic range sensor (top hat refractive index profile) or lower sensitivity larger dynamic range sensor (apodized / Gaussian / chirped refractive index profile). The optical fiber sensor 50 can have a design wavelength ranging from the visible to the near infrared spectrum (400nm - 2000nm).

The optimal level of the signals for optical sensor read out system can be specified here. The minimum required signal/noise level for features extraction can be reached not only by the fiber sensor placement and its sensitivity (signal response), but also by the setup of the parameters of the read out system that have a crucial effect on the signal/noise level and further signal processing framework. These parameters particularly include the spectral specifications of the fiber sensor (which is the spectral transmission of the FBG, or size of the Fabry-Perrot grating, or the operating wavelength) and the power of laser source for fiber read out.

### Possible fixation of the welded samples

The metal plates 6 to be welded are acting as a resonator for specific acoustic waves. To get maximum level of the AE during welding process, the plates 6 should be fixed in such a way that no damping of the resonant frequencies exists. Within the experimental setup, the optimal installation was figured out to have the minimum contact area between the clamp and the welding sample. Presently, the optimal fixation was achieved while the welding sample was attached to the metallic (or made from any other acoustic conductive material) clamp 7 from one side.

In physical terms, the welding sample 6 should be attached to the sample holder 7 with minimum contact, fixed at one point, and the resonant frequencies of the attachment part should be different from the ones of the welding sample. These are the main requirements for all welding chambers and welding setups that provide the possibility of quality control using fiber optical sensors and acoustic emission.

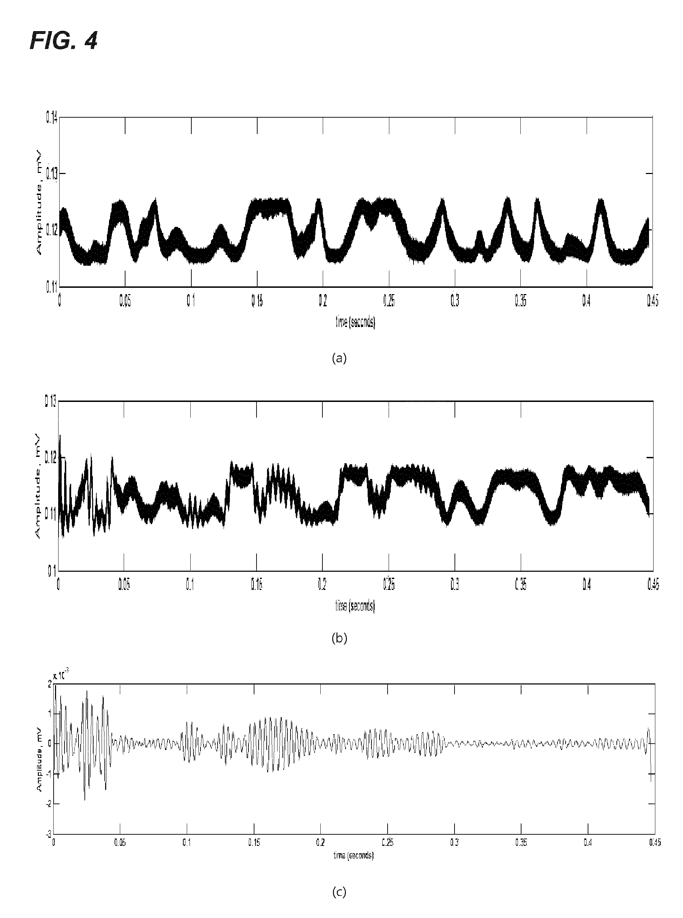

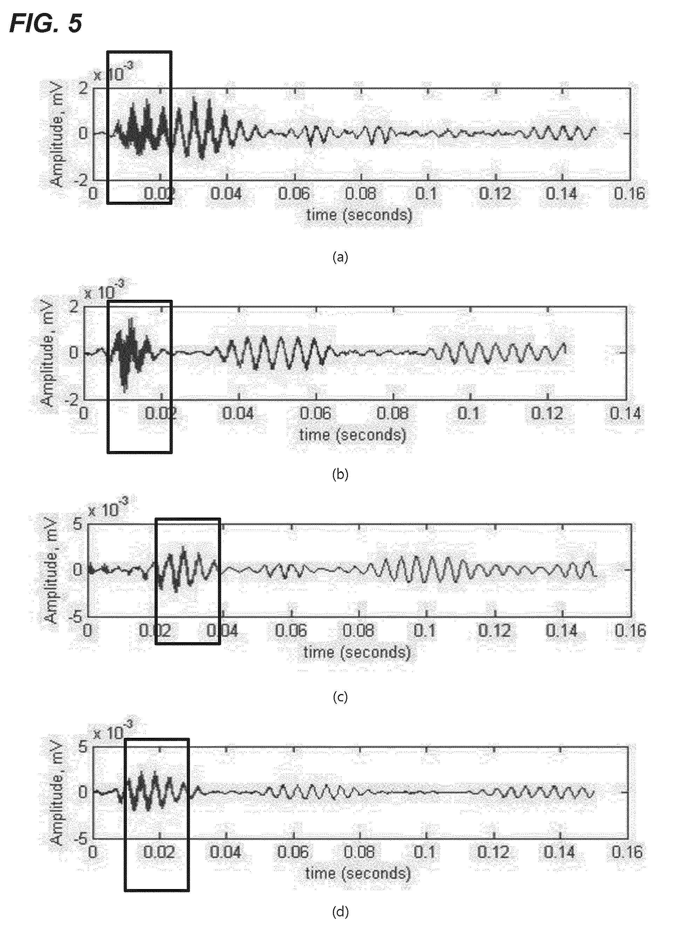

Figures 4 represent an example of the AE signal detected by the optical fiber sensor 50. High sensitivity brings high noise levels in the original signal (a). The noise sources are primarily the surrounding equipment and the sounds produced by the movements of the laser focusing device 3. As a result, the recorded signal is a modulation of noise and AE from the laser weld itself (see Figure 4 (b)). The filtering of both is possible using the standard frequency filters and as a result the signal can be extracted (shown on Figure 4 (c)). The filtering technique used here is a high pass filter. Many other filtering designs can be found.
The filtered AE signals for different power densities are displayed in Figures 5. As it can be observed, the signal is a damping beatings, the function of which is the Eigen resonant frequency of the welded plates 6 and the AE frequency of the weld, the latter is the function of the temperature rise time inside the weld pool.

The metal evaporation has an acoustic signature and can be detected by occurrence of higher frequencies in the main acoustic signal. The corresponding parts of the signals are framed. The occurrence of the material vapor can tremendously reduce the laser irradiation and is the nonlinear factor in metal heating dynamics. Using signal analysis, it is possible to detect the duration of excessive material evaporation and correct the laser irradiation correspondently.

The AE signals include the information about the occurrence of the metal excessive evaporation. This effect is extremely dangerous in terms of quality as the vapor absorbs the incident laser irradiation. The vapor absorbs the incident laser irradiation and less light reaches the metal surface. As a result rapid temperature drops and defects in the weld occur. However, it is possible to detect the vapor using AE and optical fiber sensors 50. The occurrence of vapor is characterized by the presence of ultra-high frequencies in the AE signals as shown in Figures 5. This effect is known, though it can be used as an additional control mechanism together with the rest described items.

Figure 6 depicts the family of Gabor functions for representing the signals in the basis. The basis included 300 Gabor functions for signal representation.

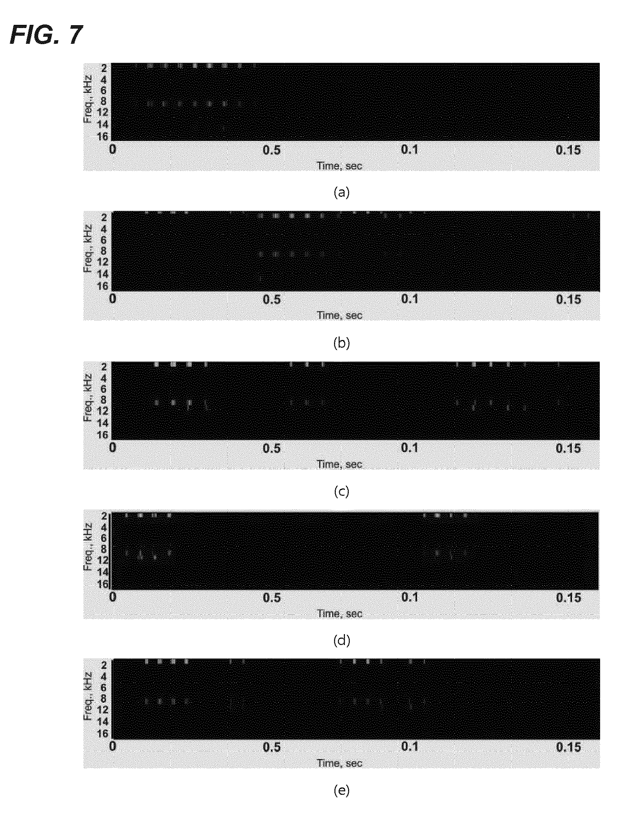

The unique descriptors for each signal from Figure 5 are designed. The descriptor is a special representation of the real signal by a limited number of digits that reflects its real content. The representation of the signal with descriptors allows recognizing the signals one from another using machine learning technique.
Further description regarding such descriptors can be found in (Huang K., Aviyente S. Sparse Representation for Signal Classification; Proceedings of conference Neural Information Processing Systems - NIPS, pp. 609-616, 20, 2006). The idea behind is the representation of the signal in the basis of Gabor functions. The descriptor of the signal can be defined here as the collection of the decomposition coefficients or their combinations. Figures 7 display the combinations of the decomposition coefficients selected by the energy threshold. As can be observed from the Figure, each signal is characterized by the specific combination of the coefficients with maximum energy. In addition to the combination of the coefficients, their numbers are also floating from one signal to another and this parameter can be used as additional feature for the signal recognition.

The representation of the signal by limited number of coefficients that reflects its content can be done also with wavelet analysis. For instance, wavelet packets decomposition (Gokhale M.Y., Daljeet Kaur Khanduja D.K. Time Domain Signal Analysis Using Wavelet Packet Decomposition Approach; Vol.3 No.3, March 2010, DOI: 10.4236/ijcns.2010.33041), or simple wavelet analysis (Lokenath D. Wavelet Transforms & Their Applications; Birkhauser, P. 12, 2002) can be used in order to deduce the same results.

The classification of the descriptors aims to recognize the current signal from a signals list using its descriptor and thus determine the welding quality. This can be done by either using finite state automata (Rajagopalan V., Ray A. Symbolic time series analysis via wavelet-based partitioning; Signal Processing 86 , 3309-3320, (2006)), or margin classifiers like support vector machines (Vapnik und Chervonenkis, Theory of Pattern Recognition,1974 (Wapnik und Tschervonenkis, Theorie der Mustererkennung, 1979)), or artificial neural networks (Haykin, S. (1999) Neural Networks: A Comprehensive Foundation, Prentice Hall, ISBN 0-13-273350-1).

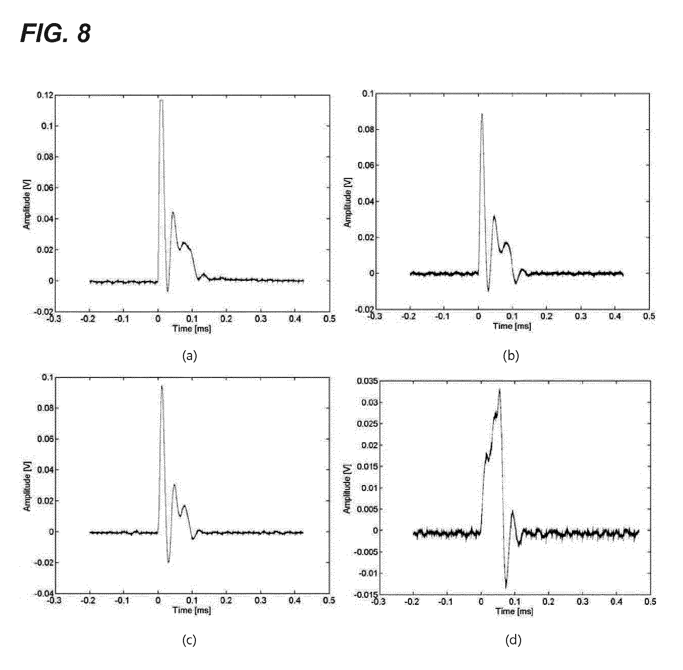

Optical emission can be additionally collected using the at least one fiber optical sensor 50. For instance, the back reflected laser light from heat affected area on the metal surface were recorded as additional feedback channel which characterizes the material absorptivity. In addition, the onset of melting can be characterized by a drastic drop in the acquired back reflected laser signal due to the surface deformation within the material phase change, see Figures 8. However, this is valid only for the surfaces, in which the scale of roughness texture is relatively smaller compared to the size of the focused light spot. The correlation between the back reflected laser light and laser power intensity is presented in Figure 8, this is optional and can be added to the AE measurements, though AE is a self-contained method that covers the needs of the process.

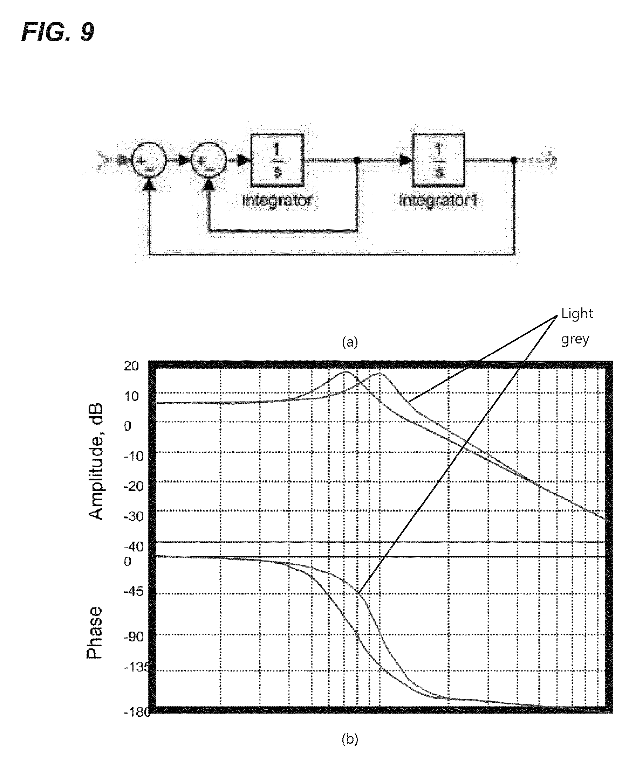

The preliminary calibration of the resonance frequency of the welded samples can be carried out using the following model. The welded samples can be, for example, represented as an oscillating element, the transfer function of which is presented on the present Figure 9. The resonance oscillating is characterized by the peak on the bode diagram, which moves along the frequency axis depending on the weld joint length. These shifts of the resonant frequency affect the signal, presented in Figures 4 and 5. As a result, the main frequency of the signal will be changed. These changes can be easily detected from the Fourier spectra of the signals. The shift in signal frequency and the corresponding length of the welded joint can be estimated using preliminary calibration procedure.

The length of the welded joint has to be taken into account while analyzing the signals. The increase of its length while the process is progressing shifts the resonance frequencies of the welded sample. This can be easily compensated describing the resonance frequencies of the welded sample by oscillation transfer function (Figure 9,a), where s is the Laplacian and the amplitude peak corresponds to the main resonance frequency. While welding two pieces, the peak is shifting to the lower frequency, as shown in Figure 9, b. This shift can be explained by the decrease of the interface between two pieces of the welded sample (which is the cause of acoustic waves inner reflection) and the reason of the change of the resonant frequency.

We are taking the acoustic emission for welding quality measurement and as a main feedback for process control of further welding steps. This is possible due to the use of combination of fiber optical sensors and algorithmic processing framework that allow distinguishing the welding quality using acoustic emission and controlling next welding steps by a feedback loop 54 of signal processing unit 53 to the laser electronics 1.

For optimization of the measurements of acoustic emission signals, a multiplicity of fiber optical sensors 50 will be used, in particular arranged symmetrically around the workpiece 6.

The used optical fibers for AE detection have very high sensitivity and thus can be placed distantly from the welded sample. They are more stable to temperature drops and are not sensitive to the scattered laser irradiation, the one that is produced by the laser source 2.

We propose to collect all the irradiation from the sample surface in a broad spectral range which includes the following components:
- back reflected laser irradiation,
- irradiation of the melt pool caused by the temperature rise (the corresponding spectral range is >1000 nm),
- irradiation of plasma plum (in case the melt pool is over heated and plasma released).

The additional information from the pinhole image of the weld is collected in the broad spectral range that mixes the temperature irradiation, back scattered light irradiation and the reflected irradiation from external light sources. We suggest to separate all those irradiations using spectrometer which increases the parametrization space of the weld. In this measuring scheme the back reflected irradiating laser light, heat emission of the melt pool can be used.

### LIST OF REFERENCE NUMERALS

- 1: laser electronics
- 2: laser source
- 3: laser focusing device/ focus objectives
- 30: focused laser beam

- 4: radiation detection setup
- 40: photo detector
- 41: beam splitter

- 5: quality control setup/ acoustic emission read out system/ welding environment
- 50: fiber optical sensors
- 51: sensor props
- 52: signal lines
- 53: processing unit
- 54: feedback loop
- 6: workpiece / welded sample
- 7: Sample holder

## Claims

1. Use of acoustic emission read out system with at least one fiber optical sensor (50) with compatible props (51), which is connected via at least one signal line (52) to a processing unit (53) as part of a laser welding setup, for in-situ and real time quality control of a running laser welding process, wherein acoustic emission is measured via at least one fiber optical sensor (50) in form of fibers with Bragg grating, fiber interferometer or Fabry-Perot structure, followed by a signal transfer and an analysis of the measured signals in the processing unit (53), estimation of the laser welding process quality due to correlation between welding quality and measured acoustic emission signals and subsequent stop of the laser welding process or adaption of laser welding parameters of a laser electronics (1) of the laser welding setup in real time via a feedback loop (54) as a result of the measured acoustic emission signals after interpretation with an algorithmic framework in the processing unit (53).

2. Use according to claim 1, wherein an additional radiation detection setup, comprising at least a photo detector (40) and a beam splitter (41) is used for detection of optical emission of the weld zone.

3. Use according to claim 1 or claim 2, wherein optical emission of the back reflected laser light from heat affected area is collected by the at least one fiber optical sensor (50).

4. Method for in-situ and real-time quality control of a laser welding process in a laser welding setup, using a laser source (2) and a laser focusing device (3) controlled by a laser electronics (1) for focusing a laser beam on a process surface of a workpiece (6) in a laser irradiation focused spot with controllable laser parameters during the running laser welding process,
**characterized by the steps:**
real-time detection of acoustic waves emitted by heat affected workpiece (6) induced by the welding incident laser light that operates in fixed or modulated continuous or pulse mode and by using at least one optical fiber sensor (50) in form of fibers with Bragg grating, fiber interferometers or Fabry-Perot structures,
transfer of the measured sensor signals via at least one signal line (52) to a processing unit (53), digitizing measured sensor signals and subsequent analysis of the digitized sensor signals in the processing unit (53) by an algorithmic framework providing extraction and classification of measured acoustic emission features for quality control of the welding process, determination actions to be taken that are either stop the welding process or
determination of improved future welding parameters, before transfer of the improved welding parameters via a feedback loop (54) from the processing unit (53) to the laser electronics (1) for application of the improved welding parameters as power density, pulse width, pulse duration, light dose or frequency, in the upcoming laser welding steps.

5. Method according to claim 4, wherein additionally to the acoustic emission the optical signals from the fiber optical sensors (50) are used for additional estimation of the weld quality, using decision trees, finite state machines or neural networks.

6. Method according to one of the claims 4 to 5, wherein the signal processing unit (53) is synchronized with the laser source (2) and acoustic emission signals are recorded each time the laser pulse heats the surface and the recording time in case of single burst does not exceed 1.00 second.

7. Method according to one of the claims 4 to 5, wherein the acoustic signals of the fiber optical sensor (50) are continuously recorded, if the laser source (2) is operating in continuous wave (CW) mode, and the real time extraction of the acoustic echo of the weld is performed with the periodicity that does not exceed 0.30 seconds.

8. Method according to one of the claims 4 to 7, wherein while analyzing the acoustic signals the correction of the acoustic signals is carried out depending on the length of the welded joint using deconvolution.

9. Laser welding setup, comprising a laser electronics (1), a laser source (2) and a laser focusing device (3) for focusing a laser beam on a surface of a workpiece (6) in a laser irradiation focused spot with controllable laser parameters, **characterized by** integration of an acoustic emission read-out system, comprising at least one optical fiber sensor (50), may be arranged inside a welding environment (5) alongside a between the laser source (2) and the laser irradiation focused spot, at least one signal line (52) between optical fiber sensor (50) and a processing unit (53) and a feedback loop (54) from the processing unit (53) to the laser electronics (1) for either stopping the welding process or application of the improved welding parameters in the upcoming laser welding steps.

10. Laser welding setup according to claim 9, wherein the optical fiber sensor (50) are fiber sensors with Bragg grating, fiber with intra- or extra-fiber Fabry-Perot cavity or fiber with acoustic interference heterodyne scheme.

11. Laser welding setup according to claim 10, wherein the optical fiber sensor (50) is placed directly on the welded sample in contact with the welded sample.

12. Laser welding setup according to one of the claims 9 to 11, wherein the at least one optical fiber sensor (50) is connected at least two different fixation points with differing resonance frequencies.

13. Laser welding setup according to claim 12, wherein at least one optical fiber sensor (50) is connected with one side to the welded sample (6) while the other side is fixed to a compatible prop (51) in the welding environment (5).

14. Laser welding setup according to one of the claims 9 to 12, wherein the fiber optical sensor (50) is fixed to a strained two-sided acoustic insulating prop (51) at two fixation points.

15. Laser welding setup according to one of the claims 9 to 14, wherein the grating of the fiber optical sensor (50) touches the welded workpiece (6).
